# EUROPÄISCHE PATENTANMELDUNG

(11) **EP 3 666 798 A1**
(43) Veröffentlichungstag der Anmeldung: **17.06.2020**
(21) Anmeldenummer: 18211478.5
(22) Anmeldetag: 11.12.2018
(51) Int. Cl.: C08B 37/00, C08B 37/14

(54) **XYLAN AUFWEISENDE ZUSAMMENSETZUNG UND VERFAHREN ZUR HERSTELLUNG EINER XYLAN AUFWEISENDEN ZUSAMMENSETZUNG**

(71) Anmelder: LENZING AKTIENGESELLSCHAFT, 4860 Lenzing (AT)
(72) Erfinder: Rohringer, Robin, 4863 Seewalchen (AT); Kraft, Gregor, 4860 Lenzing (AT); Malzner, Erwin, 4845 Rutzenmoos (AT); Sperger, Christian, 4861 Schörfling (AT); Lammer, Michael, 4901 Ottnang (AT)

(57) **Zusammenfassung**

Es wird eine Xylan aufweisende Zusammensetzung (1), sowie ein Verfahren (100) zur Herstellung einer Xylan aufweisenden Zusammensetzung (1) gezeigt, bei dem einer wässrigen alkalischen Lösung (2), welche Hemicellulosen (3) aufweist, Säure (4) zugegeben wird und dabei aus der entstandenen Fällungssuspension (5) ein Xylan aufweisender Niederschlag (6) ausgefällt wird. Um die Ausbeute des eingangs erwähnten Verfahrens zu erhöhen, wird vorgeschlagen, dass so lange kontinuierlich Säure (4) zu der wässrigen alkalischen Lösung (2) zugegeben wird bis ein pH-Wert von 4 in der Fällungssuspension (5) unterschritten wird und die Temperatur der Fällungssuspension (5) während dem Ausfällen eine Fällungstemperatur nicht unterschreitet, wobei die Fällungstemperatur zumindest 40 °C beträgt. Zudem wird ein Zellstoff- oder Viskoseverfahren (200) umfassend ein solches Verfahren (100) gezeigt.

## Beschreibung

### Technisches Gebiet

Die Erfindung betrifft ein Verfahren zur Herstellung einer Xylan aufweisenden Zusammensetzung, bei dem einer wässrigen alkalischen Lösung, welche Hemicellulosen aufweist, Säure zugegeben wird und dabei aus der entstandenen Fällungssuspension ein Xylan aufweisender Niederschlag ausgefällt wird.

### Stand der Technik

Es ist bekannt, dass sowohl bei der Herstellung von Zellstoff als auch bei der Alkalisierung von Zellstoff in einem Viskoseverfahren wässrige alkalische Lösungen als Stoffströme anfallen, welche mit Hemicellulosen angereichert sind.

Unter Hemicellulosen werden im Allgemeinen Polyosen aus Pentosen und/oder Hexosen, wie etwa Xylose, Arabinose, Glucose, Mannose oder Galactose verstanden. Hemicellulosen bezeichnen insbesondere alle Polysaccharide außer Cellulose, welche als Bestandteil pflanzlicher Zellwände, deren Matrix aus fibrillärer, teilweise kristalliner Cellulose besteht, vorkommen, sowie niedermolekulare Abbauprodukte der Cellulose, z.B. Hydroxycarbonsäuren, welche im Rahmen von Aufschlussprozessen gebildet werden können. Im Gegensatz zur Cellulose, welche ein nicht-verzweigtes Homopolymer aus Glucose ist, sind Hemicellulosen in der Regel verzweigte Heteropolymere aus oben genannten Pentosen und Hexosen. Meist weisen diese als Hauptkette ein Homopolymer auf, an welcher Verzweigungen aus weiteren Zuckern gebunden sind und so ein unregelmäßiges Makromolekül bilden. Hemicellulosen besitzen gegenüber Cellulose zudem deutlich geringere Polymerisationsgrade bzw. Kettenlängen. Solche Hemicellulosen können beispielsweise Xylane, Mannane, Galactane, oder andere Pentosane bzw. Hexosane sein. Als Xylane werden dabei vor allem pflanzliche Heteropolysaccharide mit einer D-Xylose als Hauptwiederholungseinheit (Monomer-einheit) bezeichnet.

Eine Unterscheidung zwischen Cellulosen (α-Fraktion) und Hemicellulosen (β- und γ-Fraktion) wird im Stand der Technik über die Löslichkeit in 17,5 %-iger Natronlauge definiert (WÜSTENBERG, Tanja. Cellulose und Cellulosederivate: Grundlagen, Wirkungen und Applikationen. Hamburg: Behr's Verlag, 2013.). Während β- und γ-Hemicellulosen in 17,5 %-iger Natronlauge gelöst werden können, ist α-Cellulose unlöslich. Bei der anschließenden Neutralisation fallen dann die β-Hemicellulosen aus, während die γ-Hemicellulosen in Lösung bleiben.

Aus der WO 2007/128025 A1 ist ein Verfahren zur Herstellung einer Xylan aufweisenden Zusammensetzung bekannt, bei welchem eine wässrige alkalische Lösung, welche Hemicellulosen aufweist, mit einer verdünnten Schwefelsäure versetzt wird, wobei sich in der wässrigen Lösung ein pH-Wert zwischen 4 und 5 einstellt. Der dabei nach 6-8 h anfallende Niederschlag wird danach zentrifugiert, gewaschen und getrocknet. Derartige Verfahren leiden jedoch unter einer geringen Kettenlängen- und Größenselektivität beim Ausfällen der Hemicellulosen, was zu einer reduzierten Ausbeute führt. Zudem hat der langwierige Ausfällungsprozess einen verminderten Durchsatz und höhere Herstellungskosten zur Folge.

### Offenbarung der Erfindung

Es ist daher eine Aufgabe der Erfindung ein Verfahren der eingangs erwähnten Art dahingehend zu verbessern, dass eine höhere Ausbeute bei geringeren Herstellungskosten erreicht werden kann.

Die Erfindung löst die gestellte Aufgabe dadurch, dass so lange kontinuierlich Säure zu der wässrigen alkalischen Lösung zugegeben wird bis ein pH-Wert von 4 in der Fällungssuspension unterschritten wird und die Temperatur der Fällungssuspension während dem Ausfällen 40 °C nicht unterschreitet.

Wird so lange kontinuierlich Säure zu der Fällungssuspension zugegeben bis ein pH-Wert von 4 in der Fällungssuspension unterschritten wird, so kann die Ausbeute und Qualität des erzeugten Niederschlags deutlich verbessert werden. Bei pH-Werten unter 4 können nämlich sehr vorteilhafte Bedingungen für eine vollständige Ausfällung der Hemicellulosen geschaffen werden. Unterschreitet zudem die Temperatur der Fällungssuspension während dem Ausfällen nicht eine Fällungstemperatur von zumindest 40 °C, so kann zudem für eine optimale Partikelgrößenverteilung während der Fällung gesorgt werden. Insbesondere kann durch das Halten der Fällungssuspension bei einer erhöhten Fällungstemperatur die durchschnittliche Partikelgröße vergrößert werden, was eine bessere Filtrierbarkeit des Niederschlags ermöglicht. Ein Herstellungsverfahren der eingangs erwähnten Art mit höherer Ausbeute und höherer Kosteneffizienz kann somit geschaffen werden.

Im Allgemeinen wird festgehalten, dass das erfindungsgemäße Verfahren unabhängig von der Zusammensetzung des Zellstoffes ist, aus welchem die wässrige alkalische Lösung hergestellt wurde. Werden wässrige alkalische Lösungen aus der Produktion von Buchenholzzellstoff oder der Alkalisierung von Buchenholzzellstoff verwendet, so kann eine Xylan aufweisende Zusammensetzung mit hoher Qualität und Reinheit geschaffen werden.

Weist die wässrige alkalische Lösung einen pH-Wert von zumindest 8, insbesondere von zumindest 11 auf, so kann sichergestellt werden, dass sämtliche Hemicellulosen in der wässrigen alkalischen Lösung gelöst vorliegen. Dies ist einer leichteren Verarbeitbarkeit der Lösung zuträglich, da eine unerwünschte Bildung von Niederschlägen in der wässrigen Lösung zuverlässig verhindert werden kann. Ein besonders zuverlässiges Verfahren mit verbesserter Ausbeute kann somit geschaffen werden.

Die Ausbeute des Verfahrens kann weiter verbessert werden, wenn die wässrige alkalische Lösung zwischen 5 g/l und 150 g/l, insbesondere zwischen 30 g/l und 70 g/l, Hemicellulosen aufweist. Weist die wässrige alkalische Lösung nämlich einen derartigen Hemicellulosengehalt auf, so kann ein Niederschlag mit höherer Qualität geschaffen werden. Insbesondere kann durch Aufkonzentrierung der Hemicellulosen in der wässrigen alkalischen Lösung der Xylan-Anteil im Niederschlag weiter erhöht werden.

Das erfindungsgemäße Verfahren kann weiter verbessert werden, wenn der wässrigen alkalischen Lösung kontinuierlich unter ständigem Rühren die Säure zugegeben wird. Durch das langsame Zugeben der Säure können nämlich große Sprünge im pH-Wert vermieden werden. Ein zu starkes lokales Absinken des pH-Werts kann nämlich zu einer ungewünschten frühzeitigen Ausfällung der Hemicellulosen führen, wodurch die Qualität des Niederschlags und insbesondere dessen Partikelgrößen- und Molmassenverteilung negativ beeinflusst werden. Das langsame Zugeben unter ständigem Rühren kann daher einen über die gesamte Fällungssuspension homogenen pH-Wert ermöglichen und somit eine hohe Qualität des Niederschlags sicherstellen. Die als Fällungsmittel zugegebene Säure kann vorzugsweise eine mit Wasser mischbare organische oder anorganische Säure, beispielsweise Schwefelsäure oder Essigsäure, sein. Vorteilhafterweise wird so lange Säure zu der wässrigen alkalischen Lösung zugegeben, bis eine Fällungssuspension mit einem pH-Wert von unter 3 erhalten wird. In einer besonders vorteilhaften Ausführungsvariante wird so lange Säure zu der wässrigen alkalischen Lösung zugegeben, bis in der Fällungssuspension ein pH-Wert von 2,5 unterschritten wird. Der pH-Wert der Fällungssuspension ist nämlich ausschlaggebend für die Ausbeute und Qualität des erzeugten Niederschlags, da erst bei Unterschreitung eines bestimmten pH-Werts eine vollständige Ausfällung der gewünschten β-Hemicellulosen, nämlich insbesondere des Xylans, garantiert werden kann. Durch zuvor genannte vorteilhafte Ausgestaltungen der Erfindung kann demnach ein Verfahren zur Herstellung einer Xylan aufweisenden Zusammensetzung mit hoher Ausbeute und hoher Zuverlässigkeit geschaffen werden

Unterschreitet die Temperatur der Fällungssuspension während dem Ausfällen nicht eine Fällungstemperatur von zumindest 50 °C, so kann die Partikelgrößenverteilung im Niederschlag weiter optimiert werden. Besonders vorteilhaft kann sich dabei auszeichnen, wenn die Fällungstemperatur zumindest 60 °C beträgt und die Fällungssuspension während dem Ausfällen zudem eine Temperatur von 95 °C nicht überschreitet. Die Partikelgrößen- und Molmassenverteilung des Niederschlags werden nämlich aufgrund der Thixotropie der Fällungssuspension durch die Temperatur während dem Ausfällen stark beeinflusst. Bei geringen Fällungstemperaturen fallen bevorzugt sehr kleine Hemicellulose-Partikel mit niedrigem DP-Wert (Polymerisationsgrad) aus, während bei hohen Fällungstemperaturen vorwiegend Hemicellulosen mit hohem DP-Wert ausfallen. Durch geeignete Wahl der Fällungstemperatur können somit die gewünschten Eigenschaften des Niederschlags hinsichtlich Partikelgröße und Molmasse gesteuert werden. Insbesondere kann dabei ein besonders leicht vom Überstand filtrierbarer Niederschlag geschaffen werden, wodurch die Ausbeute des Verfahrens weiter verbessert werden kann.

Das Verfahren kann weiter zuverlässiger gestaltet werden, wenn die wässrige alkalische Lösung vor dem Zugeben der Säure auf zumindest die Fällungstemperatur erwärmt wird. Alternativ kann auch direkt eine wässrige alkalische Lösung zugeführt werden, welche bereits eine Temperatur höher als die Fällungstemperatur aufweist. Durch die Erwärmung der wässrigen alkalischen Lösung vor dem Zugeben der Säure und damit vor dem Ausfällen können nämlich Temperaturschwankungen während dem Ausfällen vermieden werden und somit ein besonders stabiles und zuverlässiges Verfahren geschaffen werden.

Wird die wässrige alkalische Lösung zudem mit einer maximalen Heizrate von 50 °C/h erwärmt, so können große Temperatursprünge in der wässrigen Lösung beim Erwärmen vermieden werden, was der Qualität des Niederschlags beim Ausfällen weiter zuträglich ist. Die Zuverlässigkeit des Verfahrens kann somit weiter verbessert werden.

Das erfindungsgemäße Verfahren kann sich besonders dadurch auszeichnen, dass zumindest 90 % des Xylan aufweisenden Niederschlags nach dem Ausfällen eine Partikelgröße von größer 5 µm aufweist. Liegt die Partikelgröße des Niederschlags nämlich über 5 µm, so kann ein besonders gut vom Überstand trennbarer Niederschlag erzeugt werden, wodurch die Ausbeute des Verfahrens weiter gesteigert werden kann.

Wird der Xylan aufweisende Niederschlag nach dem Ausfällen, insbesondere durch Filtern, von dem Überstand getrennt, so kann ein besonders einfaches Verfahren zur Herstellung einer Xylan aufweisenden Zusammensetzung bereitgestellt werden. Wird der Überstand zudem gewaschen und/oder getrocknet, so kann die Qualität des Verfahrensprodukts weiter verbessert werden.

Das erfindungsgemäße Verfahren eignet sich ganz besonders, wenn die Hemicellulosen aufweisende wässrige alkalische Lösung eine Ablauge aus einer Zellstoff- oder Viskoseproduktion ist. Im Besonderen kann die wässrige alkalische Lösung eine Presslauge sein, welche in einem Viskoseverfahren, beispielsweise bei der Alkalisierung von Zellstoff mit Natronlauge zu Alkalizellulose und nachfolgendem Abpressen des alkalisierten Zellstoffs, gewonnen wird bzw. anfällt. Eine solche Presslauge enthält dabei typischerweise 100 - 300 g/l Natronlauge und weist einen Gehalt an Hemicellulosen zwischen 5 - 150 g/l, jeweils bezogen auf das Gesamtvolumen der Presslauge, auf. Vorteilhafterweise weist eine solche Presslauge von 150 bis 250 g/l Natronlauge auf. Zudem beträgt der Gehalt an Hemicellulosen vorteilhafterweise zwischen 30 und 70 g/l.

Eine weitere Aufgabe der Erfindung besteht darin, eine Xylan aufweisende Zusammensetzung bereitzustellen, welche sich durch geringe Verunreinigung und hohen Xylangehalt und somit insbesondere durch eine hohe Verträglichkeit im menschlichen oder tierischen Körper auszeichnet.

Die Erfindung löst die gestellte Aufgabe durch eine Zusammensetzung, welche bezogen auf ihre Trockensubstanz zumindest 85 Gew.-% Polysaccharide aus β-Hemicellulosen, enthaltend Xylan, aufweist und als Rest Asche, Wasser und unvermeidbare Verunreinigungen enthält.

Die erfindungsgemäße Zusammensetzung kann sich weiter auszeichnen, wenn diese bezogen auf ihre Trockensubstanz zumindest 80 Gew.-% Xylan aufweist. Weist die Zusammensetzung bezogen auf ihre Trockensubstanz zumindest 84 Gew.-% Xylan, bzw. in weiteren vorteilhaften Ausgestaltungen der Erfindung zumindest 88 Gew.-% oder 90 Gew.-% Xylan, auf, so kann ein besonders hochwertiges Produkt mit hoher Verträglichkeit und vielseitiger Einsatzmöglichkeit geschaffen werden.

Die Zusammensetzung kann weiter verbessert werden, wenn diese bezogen auf ihre Trockensubstanz weniger als 10 Gew.-%, insbesondere höchstens 8 Gew.-%, Glucan und weniger als 1 Gew.-% sonstige Polysaccharide aufweist. Durch den besonders geringen Glucan-Gehalt kann sich die Zusammensetzung nämlich vor allem für medizinische Anwendungen eignen und eine hohe Verträglichkeit im menschlichen und/oder tierischen Körper aufweisen.

Die erfindungsgemäße Zusammensetzung nach einem der Ansprüche 11 bis 13 kann sich besonders zur Verwendung als Tablettenhilfsstoff in Arzneimitteln eignen. Xylane können nämlich durch ihre besonderen Quelleigenschaften als Tablettensprengmittel zum Einsatz kommen und den Bedarf an synthetischen Tablettensprengmitteln unnötig machen. Damit kann die Herstellung von Arzneimitteln weiter vereinfacht werden, da die erfindungsgemäße Zusammensetzung direkt mit dem pharmakologisch wirksamen Stoff zu Tabletten verpresst werden kann. Zudem können Xylane eine verzögerte Freisetzung von pharmakologisch wirksamen Zusammensetzungen bewirken und so eine einfache Herstellung von Retard-Präparaten (etwa zur verzögerten Wirkstofffreisetzung - "delayed release") ermöglichen.

Die erfindungsgemäße Zusammensetzung nach einem der Ansprüche 11 bis 13 kann sich zudem vorteilhaft zur Herstellung von Xylan-Sulfat eignen. Sulfatierte Xylane können beispielsweise als Virostatikum, Anticancerogen, oder Blutgerinnungshemmer verwendet werden.

### Kurzbeschreibung der Zeichnungen

Im Folgenden werden die Ausführungsarten der Erfindung anhand der Zeichnungen beschrieben. Es zeigen:
- Fig. 1: eine schematische Darstellung einer Ausführungsform des erfindungsgemäßen Verfahrens in einem ersten Verfahrensschritt,
- Fig. 2: eine schematische Darstellung des Verfahrens aus Fig. 1 in einem weiteren Verfahrensschritt, und
- Fig. 3: eine schematische Darstellung des Verfahrens aus Fig. 1 und 2 in einem dritten Verfahrensschritt.

### Wege zur Ausführung der Erfindung

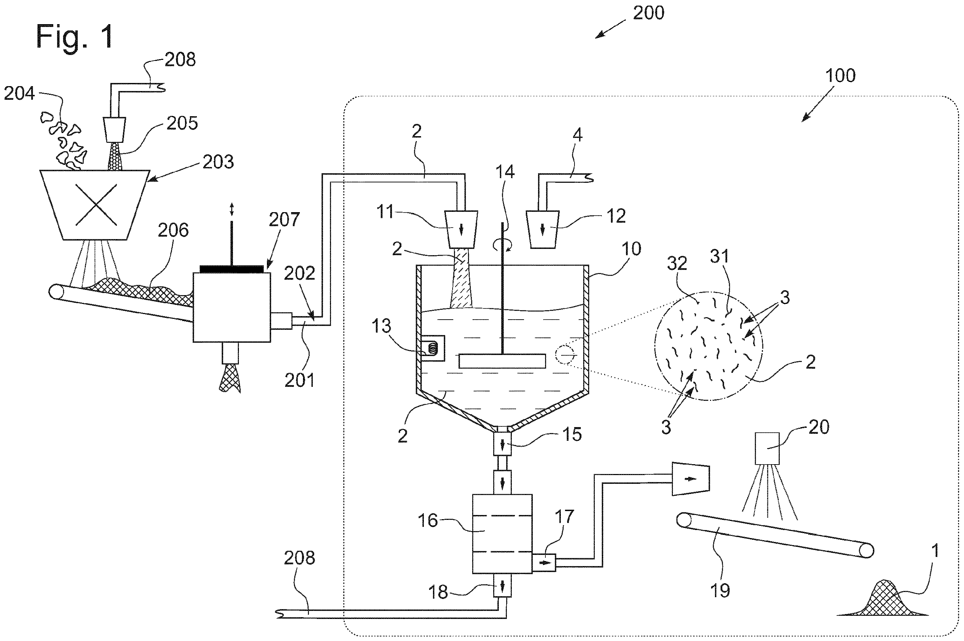

In den Fig. 1 bis 3 ist schematisch ein Verfahren 100 zur Herstellung einer Xylan aufweisenden Zusammensetzung 1 in verschiedenen Verfahrensstadien dargestellt. Als Ausgangsstoff des Verfahrens 100 dient eine wässrige alkalische Lösung 2, welche Hemicellulosen 3 enthält und beispielsweise als Ablauge 201 in einer Zellstoff- oder Viskoseproduktion 200 anfällt. Entsprechend dem in dem in Fig. 1 dargestellten Ausführungsbeispiels des Verfahrens ist die wässrige alkalische Lösung 2 eine Ablauge 201, welche in einer Alkalisierungsstufe 203 bei der Alkalisierung von Zellstoff 204 mit Lauge 205 im Rahmen eines Viskoseverfahrens 200 anfällt. Dazu wird der alkalisierte Zellstoff 206 in einer Presse 207 abgepresst und die Ablauge 202 als Presslauge 201 erhalten, welche dem erfindungsgemäßen Verfahren 100 als wässrige alkalische Lösung 2 zugeführt wird. Das erfindungsgemäße Verfahren 100 kann dabei eigenständig oder Teil des Viskoseverfahrens 200 sein.

Wie in Fig. 1 gezeigt, wird die wässrige alkalische Lösung 2 in einem ersten Verfahrensschritt aus dem Viskoseverfahren über einen ersten Einlass 11 einem Behälter 10 zugeführt. Der Behälter 10 weist zudem einen zweiten Einlass 12 auf, über welchen Säure 4 zugeführt werden kann. Vor dem Zugeben der Säure 4 wird die wässrige alkalische Lösung 2 auf zumindest die Fällungstemperatur - welche in einer Ausführungsvariante zumindest 40 °C, in einer anderen Ausführungsvariante zumindest 50 °C und in einer weiteren Ausführungsvariante zumindest 60 °C beträgt - aufgeheizt, wobei während des Aufheizens eine maximale Heizrate von 50 °C/h nicht überschritten wird. Das Aufheizen kann in einem Ausführungsbeispiel, wie in Fig. 1 dargestellt, über eine in dem Behälter integrierte Heizung 13 erfolgen. Die Heizung 13 kann in einer weiteren Ausführungsvariante etwa dem ersten Einlass 11 vorgeschaltet sein und die wässrige alkalische Lösung 2 im Durchlauf erhitzen. In einem weiteren Ausführungsbeispiel wird die wässrige alkalische Lösung 2 als bereits über die Fällungstemperatur aufgeheizte wässrige alkalische Lösung 2 aus dem Viskoseverfahren 200 direkt zugeführt. Ein zusätzliches Aufheizen kann hierbei somit ausbleiben.

Die wässrige alkalische Lösung 2 weist in einem ersten Ausführungsbeispiel einen pH-Wert von zumindest 8, wie etwa von zumindest 9, wie etwa von zumindest 10, wie etwa von zumindest 11 auf. Zudem weist die wässrige alkalische Lösung in einer ersten Ausführungsvariante zwischen 5 und 150 g/l, wie etwa zwischen 10 und 120 g/l, wie etwa zwischen 20 und 100 g/l, wie etwa zwischen 30 und 70 g/l Hemicellulosen auf.

Die in der wässrigen alkalischen Lösung 2 enthaltenen Hemicellulosen 3 können im Wesentlichen in β-Hemicellulosen 31 und γ-Hemicellulosen 32 eingeteilt werden, wie dies im einleitenden Teil der Beschreibung beschrieben ist. Vor dem Zugeben der Säure 4 im ersten Verfahrensschritt liegen sowohl β- als auch γ-Hemicellulosen 31, 32 in der wässrigen alkalischen Lösung 2 gelöst vor.

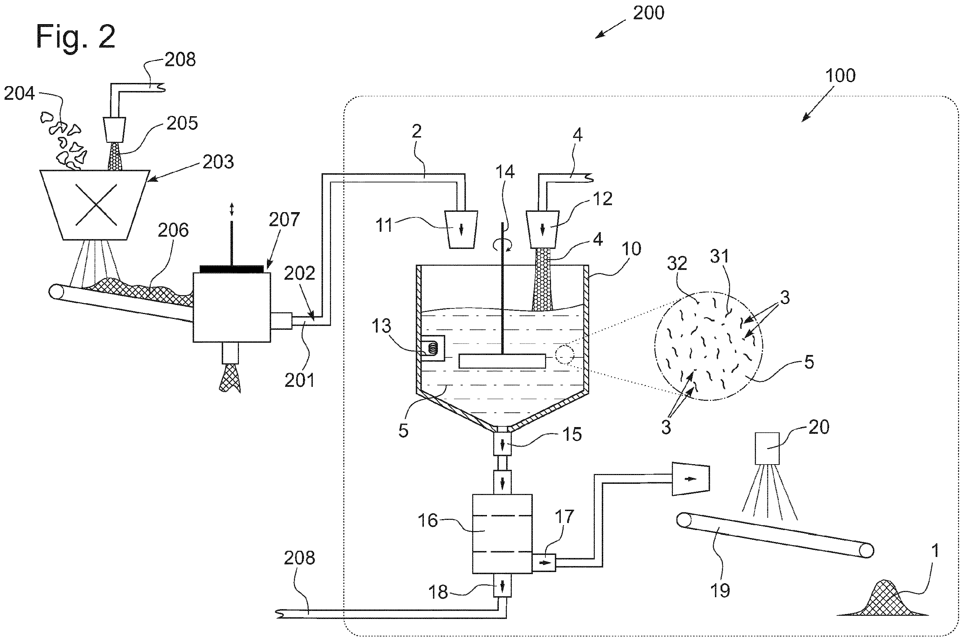

Fig. 2 zeigt das erfindungsgemäße Verfahren 100 in einem zweiten Verfahrensschritt, nachdem die wässrige alkalische Lösung 2 dem Behälter 10 zugeführt und über die Fällungstemperatur aufgeheizt wurde. Dabei wird der wässrigen alkalischen Lösung 2 in diesem Schritt so lange Säure 4 durch den zweiten Einlass 12 an den Behälter 10 zugegeben, bis in der darin erhaltenen Fällungssuspension 5 ein pH-Wert von 4 unterschritten wird. In einer anderen Ausführungsvariante wird der alkalischen Lösung 2 so lange Säure 4 zugegeben, bis in der erhaltenen Fällungssuspension 5 ein pH-Wert von unter 3, wie etwa von unter 2,5 erreicht wird. Die Säure 4 wird dabei kontinuierlich durch den zweiten Einlass 12 unter ständigem Rühren zu der wässrigen alkalischen Lösung 2 im Behälter 10 zugegeben um eine homogene Verteilung des pH-Werts in der Fällungssuspension 5 zu gewährleisten. Das ständige Rühren im Behälter 10 kann gemäß der in Fig. 2 dargestellten Ausführungsform durch eine im Behälter 10 integrierte Rühreinrichtung 14 erfolgen.

Eine solche Säure 4 kann beispielsweise Essigsäure, Schwefelsäure, Kieselsäure oder eine andere wasserlösliche organische oder anorganische Säure sein. Das Zugeben der Säure 4 zu der alkalischen Lösung 2 erfolgt dabei, wie in den Fig. 1 bis 3 dargestellt, in dem Behälter 10 chargenweise bzw. in einem diskontinuierlichen Prozess. Alternativ ist jedoch in einem weiteren Ausführungsbeispiel möglich, dass das Zugeben von Säure 4 zu der alkalischen Lösung 2 in einem kontinuierlichen Prozess erfolgt, was jedoch in den Figuren nicht näher dargestellt wurde.

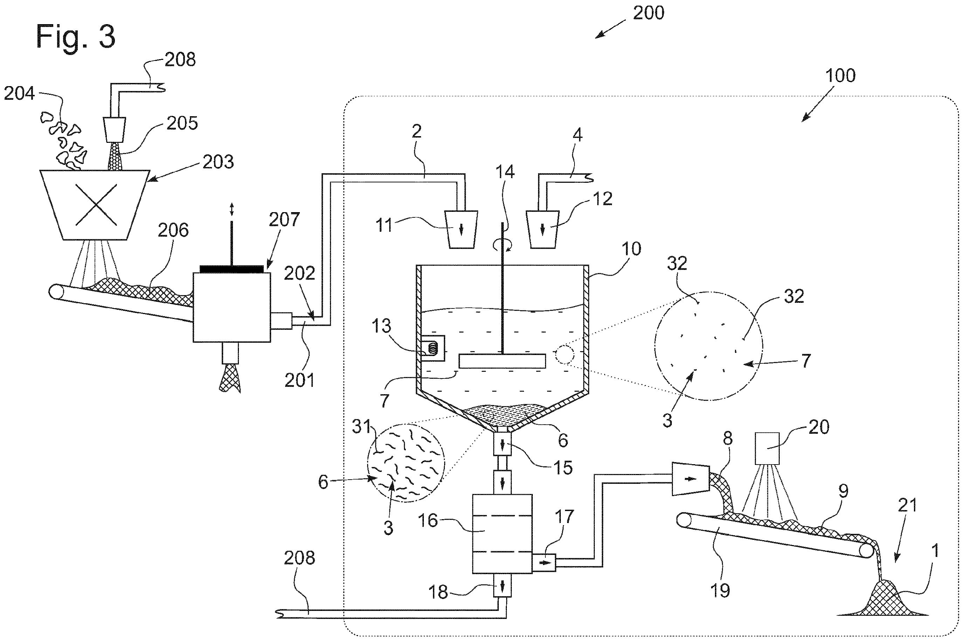

Während des gesamten Ausfällens und insbesondere auch während dem Zugeben der Säure 4 wird die Temperatur der Fällungssuspension 5 oberhalb einer Fällungstemperatur von zumindest 40 °C gehalten um eine vorteilhafte Partikelverteilung im Niederschlag 6 (siehe Fig. 3) zu erreichen. In einer anderen Ausführungsvariante beträgt die Fällungstemperatur zumindest 50 °C, wie etwa zumindest 60 °C. Die Temperatur der Fällungssuspension 5 sollte jedoch 95 °C nicht überschreiten um die bestmögliche Ausbeute zu gewährleisten. Daher sollte das Zuführen der Säure 4 langsam und kontinuierlich erfolgen, um zu große Temperaturanstiege, welche durch die exotherme Neutralisierungsreaktion zwischen der wässrigen alkalischen Lösung 2 und der Säure 4 hervorgerufen werden können, zu vermeiden. Nötigenfalls kann die Fällungssuspension 5 durch die Heizung 13 weiter temperiert werden, um die Temperatur der Fällungssuspension 5 über der gewünschten Fällungstemperatur zu halten.

In Fig. 3 ist das erfindungsgemäße Verfahren 100 in einem dritten Verfahrensschritt dargestellt, wobei der Xylan aufweisende Niederschlag 6 aus der Fällungssuspension 5 ausgefällt wurde. Die Fällungssuspension 5 wird dabei in einen Überstand 7, welcher im Wesentlichen frei von β-Hemicellulosen 31 ist, und einen Niederschlag 6, welcher im Wesentlichen aus β-Hemicellulosen 31 besteht, aufgetrennt. Der Überstand 7 enthält zudem die γ-Hemicellulosen 32, welche nicht ausgefällt werden. In einem ersten Ausführungsbeispiel weisen zumindest 90 % der Partikel 8 in dem Xylan aufweisende Niederschlag 6 nach dem Ausfällen eine Partikelgröße von größer 5 µm auf. In einem weiteren Ausführungsbeispiel weisen zumindest 95 % der Partikel 8 eine Partikelgröße von größer 5 µm auf.

Der Niederschlag 6 und der Überstand 7 können nach dem Ausfällen durch einen Auslass 15 des Behälters 10 einem Filter 16 zugeführt werden, um den Niederschlag 6 vom Überstand 7 zu trennen. Dabei wird die Membran des Filters 16 derart gewählt, dass ein ungehindertes Passieren des Überstands 7 und den darin enthaltenen γ-Hemicellulosen 32 ermöglicht wird, während der Niederschlag 6 mit den β-Hemicellulosen 31 zuverlässig zurückgehalten wird. In einer Ausführungsvariante kann beispielsweise eine Mikrofiltermembran mit einer Porengröße zwischen 0,1 µm und 1 µm verwendet werden.

Der Überstand 7 passiert als Permeat 18 den Filter und kann zur weiteren Verwendung als rückgewonnene Alkalisierlauge 208 in einem Viskose- oder Zellstoffverfahren 200 verwendet werden. Die rückgewonnene Alkalisierlauge 208 kann dabei zumindest teilweise als Lauge 205 zur Alkalisierung von Zellstoff 205 in der Alkalisierungsstufe 203 verwendet werden, wodurch ein äußerst effizientes und kosteneffizientes Viskose- oder Zellstoffverfahren 200, welches das erfindungsgemäße Verfahren 100 umfasst, geschaffen wird.

Der Niederschlag 6 verlässt als Retentat 17 den Filter 16 und wird danach als gefilterter Niederschlag 8 über eine Fördereinheit 19 und eine Wasch- und Trockeneinheit 20 gewaschen und getrocknet. Die Trocknung des gefilterten Niederschlags 8 erfolgt in einer Ausführungsvariante über einen Trockner 20 mit indirekter Heizung, um eine Schädigung der temperaturempflindlichen β-Hemicellulosen 31 zu vermeiden. Der gewaschene und getrocknete Niederschlag 9 kann optional noch zerkleinert werden, beispielsweise gemahlen werden, um eine Xylan aufweisende Zusammensetzung 1 mit gleichmäßigen Eigenschaften zu erhalten. Die gesamte Charge 21 der Xylan aufweisenden Zusammensetzung 1 wird danach einer analytischen Qualitätskontrolle unterzogen und eine Spezifikation für die Charge 21 erstellt. Die Charge 21 kann dann beliebig konfektioniert und verpackt werden.

### Beispiele

In der folgenden Tabelle 1 sind die Spezifikationen bzw. Analyseergebnisse von verschiedenen Chargen der erfindungsgemäßen Xylan aufweisenden Zusammensetzung als Beispiele B1 bis B4 gezeigt. Alle Zusammensetzungen der Beispiele B1 bis B4 wurden jeweils entsprechend einem Verfahren gemäß einem der Ansprüche 1 bis 10 hergestellt. Als wässrige alkalische Lösungen dienten jeweils die Presslaugen nach der Alkalisierung von Buchenholzzellstoff in einem Viskoseverfahren. Die wässrigen alkalischen Lösungen wurden mit Schwefelsäure oder Essigsäure zu der Fällungssuspension vermischt, wobei die Fällung bei einer Temperatur zwischen 60 °C und 80 °C erfolgte und der pH-Wert der Fällungssuspension unter 3 lag. Der erhaltene Niederschlag wurde vom Überstand abfiltriert und gewaschen und getrocknet. Die erhaltenen Chargen von Xylan aufweisenden Zusammensetzungen wurden dann auf ihre Bestandteile hin untersucht.

Zur Bestimmung der Spezifikation (Bestimmung der Polyosen-Gehalte in der Xylan aufweisenden Zusammensetzung) wurde eine Anionentauscherchromatografie kombiniert mit gepulster Amperometrie verwendet. In Tabelle 1 sind die dabei verwendeten Methodenparameter angeführt.

**Tabelle 1: Parameter zur Anionentauscherchromatografie**

| | |
|---|---|
| Vorsäule: | Dionex CarboPac SA10 4 * 50 mm |
| Trennsäule: | Dionex CarboPac SA10 4 * 250 mm |
| Eluent A: | Deionisiertes Wasser |
| Eluent B: | 350 mM Natronlauge (NaOH) |
| Pumpenhinterspülung: | Deionisiertes Wasser |
| Flussrate: | 1 ml/min |
| Injektionsvolumen: | 10 µl |
| Nachsäulenreagens: | 350 mM Natronlauge (NaOH) - 0,8 ml/min |
| Detektion: | Gepulste Amperometrie |

Die Anionentauscherchromatografie wird dabei regelmäßig anhand von Probenstandards (bspw. Glucose, Xylose, Mannose) kalibriert um eine konstant hohe Genauigkeit zu gewährleisten.

Die in den Tabellen 2 und 3 angegebenen Gehalte beziehen sich jeweils in Gewichtsprozenten (Gew.-%) auf die Trockenmasse der Zusammensetzung (abgekürzt: % TM). Der Trockenmassengehalt ist in Gewichtsprozent (Gew.-%) bezogen auf die Gesamtmasse der Zusammensetzung angegeben. Neben den angeführten β-Hemicellulosen Xylan, Glucan, Mannan, Arabinan, Rhamnan und Galactan können weitere, nicht explizit angeführte Polyosen enthalten sein, deren Summe an Gehalten 0,1 % TM nicht übersteigt.

**Tabelle 2: Spezifikationen der erfindungsgemäßen Beispiele B1 bis B4.**

| Beispiel | Xylan [% TM] | Glucan [% TM] | Mannan [% TM] | Arabinan [% TM] | Rhamnan [% TM] | Galactan [% TM] | Asche [% TM] | Trockenm. [Gew.-%] |
|---|---|---|---|---|---|---|---|---|
| B1 | 86,3 | 3,1 | 0,0 | 0,0 | 0,0 | 0,0 | 10,6 | 95,1 |
| B2 | 86,7 | 7,3 | 0,4 | 0,0 | 0,0 | 0,0 | 5,6 | 94,9 |
| B3 | 86,2 | 7,3 | 0,4 | 0,0 | 0,0 | 0,0 | 6,1 | 94,8 |
| B4 | 83,6 | 7,5 | 0,7 | 0,0 | 0,0 | 0,0 | 8,2 | 95,0 |

Die Zusammensetzungen gemäß der Beispiele B1 bis B4 zeigen allesamt einen Xylan-Gehalt von größer 80 Gew.-% bezogen auf die Trockenmasse. Zudem liegt der Glucan-Gehalt in allen Beispielen unter 10 Gew.-%, bzw. unter 8 Gew.-% bezogen auf die Trockenmasse. In den Beispielen B1 bis B3 liegt der Xylan-Gehalt über 84 Gew.-% d.TM, bzw. sogar über 86 Gew.-% d.TM. In Beispiel B1 liegt der Glucan-Gehalt unter 6 Gew.-% d.TM, bzw. sogar unter 4 Gew.-% d.TM. Alle Beispiele B1 bis B4 weisen einen Gehalt an β-Hemicellulosen von über 85 Gew.-% bezogen auf die Trockenmasse auf.

In Tabelle 3 sind die Spezifikationen bzw. Analyseergebnisse von am Markt erhältlichen Vergleichsbeispielen C1 bis C3 gezeigt:
C1 ist eine Xylan aufweisende Zusammensetzung aus Buchenholz erhältlich von Symrise Bioactives AG, erworben im Juli 2011.
C2 ist ebenfalls eine aus Buchenholz hergestellte Xylan aufweisende Zusammensetzung erhältlich von der RCMDT GmbH, Deutschland, erworben im Oktober 2017.
C3 ist eine weitere aus Buchenholz hergestellte Xylan aufweisende Zusammensetzung von Megazyme u.c., Irland, erworben im März 2018.

**Tabelle 3: Spezifikationen der Vergleichsbeispiele C1 bis C3.**

| Beispiel | Xylan [% TM] | Glucan [% TM] | Mannan [% TM] | Arabinan [% TM] | Rhamnan [% TM] | Galactan [% TM] | Asche [% TM] | Trockenm. [Gew.-%] |
|---|---|---|---|---|---|---|---|---|
| C1 | 72,3 | 2,3 | 0,0 | 0,4 | 0,6 | 0,8 | 23,6 | 90,3 |
| C2 | 74,7 | 2,2 | 0,0 | 0,4 | 0,7 | 1,2 | 20,7 | 89,8 |
| C3 | 79,8 | 1,4 | 0,1 | 0,4 | 0,5 | 1,2 | 16,4 | 91,1 |

Die Vergleichsbeispiele C1 bis C3 zeigen allesamt einen Xylan-Gehalt von kleiner 80 Gew.-% bezogen auf die Trockenmasse. Zudem liegt bei allen Vergleichsbeispielen C1 bis C3 der Gesamtgehalt an β-Hemicellulosen unter 85 Gew.-% d.TM.

Die erfindungsgemäßen Xylan aufweisenden Zusammensetzungen der Beispiele B1 bis B4 zeigen demnach gegenüber den am Markt befindlichen Xylan aufweisenden Zusammensetzungen eine stark verbesserte, hohe Reinheit, welche sich speziell für medizinische Anwendungen vorteilhaft auszeichnen kann.

## Patentansprüche

1. Verfahren zur Herstellung einer Xylan aufweisenden Zusammensetzung (1), bei dem einer wässrigen alkalischen Lösung (2), welche Hemicellulosen (3) aufweist, Säure (4) zugegeben wird und dabei aus der entstandenen Fällungssuspension (5) ein Xylan aufweisender Niederschlag (6) ausgefällt wird, **dadurch gekennzeichnet, dass** so lange kontinuierlich Säure (4) zu der wässrigen alkalischen Lösung (2) zugegeben wird bis ein pH-Wert von 4 in der Fällungssuspension (5) unterschritten wird und die Temperatur der Fällungssuspension (5) während dem Ausfällen eine Fällungstemperatur nicht unterschreitet, wobei die Fällungstemperatur zumindest 40 °C beträgt.

2. Verfahren nach Anspruch 1, **dadurch gekennzeichnet, dass** die wässrige alkalische Lösung (2) vor dem Zugeben der Säure (4) einen pH-Wert von zumindest 8, insbesondere von zumindest 11 aufweist.

3. Verfahren nach einem der Ansprüche 1 oder 2, **dadurch gekennzeichnet, dass** der wässrigen alkalischen Lösung (2) so lange kontinuierlich unter ständigem Rühren Säure (4), insbesondere eine Säure (4), ausgewählt aus der Gruppe enthaltend mit Wasser mischbare organische oder anorganische Säuren, zugegeben wird bis ein pH-Wert von 3, besonders bevorzugt ein pH-Wert von 2,5, unterschritten wird.

4. Verfahren nach einem der Ansprüche 1 bis 3, **dadurch gekennzeichnet, dass** die Fällungstemperatur zumindest 50 °C, insbesondere zumindest 60 °C, beträgt und die Temperatur der Fällungssuspension (5) während dem Ausfällen 95 °C nicht überschreitet.

5. Verfahren nach einem der Ansprüche 1 bis 4, **dadurch gekennzeichnet, dass** die wässrige alkalische Lösung (2) vor dem Zugeben der Säure (4) auf zumindest die Fällungstemperatur erwärmt wird.

6. Verfahren nach Anspruch 5, **dadurch gekennzeichnet, dass** die wässrige alkalische Lösung (2) mit einer maximalen Heizrate von 50 °C/h erwärmt wird.

7. Verfahren nach einem der Ansprüche 1 bis 6, **dadurch gekennzeichnet, dass** zumindest 90 % des Xylan aufweisenden Niederschlags (6) nach dem Ausfällen eine Partikelgröße von größer 5 µm aufweist.

8. Verfahren nach einem der Ansprüche 1 bis 7, **dadurch gekennzeichnet, dass** der Xylan aufweisende Niederschlag (6) nach dem Ausfällen, insbesondere durch Filtern, von dem Überstand (7) getrennt wird und insbesondere gewaschen und/oder getrocknet wird.

9. Verfahren nach einem der Ansprüche 1 bis 8, **dadurch gekennzeichnet, dass** die wässrige alkalische Lösung (2) eine Presslauge (201) ist, welche in einem Viskoseverfahren (200), insbesondere in einer Akalisierungsstufe (203) bei der Alkalisierung von Zellstoff (204), gewonnen wird.

10. Zusammensetzung, insbesondere hergestellt durch ein Verfahren (100) gemäß einem der Ansprüche 1 bis 9, welche bezogen auf ihre Trockensubstanz zumindest 85 Gew.-% Polysaccharide aus β-Hemicellulosen, enthaltend Xylan, aufweist und als Rest Asche, Wasser und unvermeidbare Verunreinigungen enthält.

11. Zusammensetzung nach Anspruch 10, wobei die Zusammensetzung (1) bezogen auf ihre Trockensubstanz zumindest 80 Gew.-% Xylan, insbesondere zumindest 84 Gew.-% Xylan aufweist.

12. Zusammensetzung nach Anspruch 11, wobei die Zusammensetzung (1) bezogen auf ihre Trockensubstanz weniger als 10 Gew.-%, insbesondere höchstens 8 Gew.-%, Glucan und weniger als 1 Gew.-% sonstige Polysaccharide aufweist.

13. Zusammensetzung nach einem der Ansprüche 10 bis 12 zur Verwendung als Tablettenhilfsstoff, insbesondere zur verzögerten Freisetzung von pharmakologisch wirksamen Zusammensetzungen.

14. Verwendung einer Zusammensetzung (1) nach einem der Ansprüche 10 bis 12 zur Herstellung von Xylan-Sulfat.

15. Zellstoff- oder Viskoseverfahren, bei dem Zellstoff (204) in einer Alkalisierungsstufe (203) mit Natronlauge (205) alkalisiert wird und durch Pressen (207) eine Presslauge (201) von dem alkalisierten Zellstoff (206) abgetrennt wird, welche Hemicellulosen (3) in einer wässrigen alkalischen Lösung (2) aufweist, und aus der Presslauge (201) in einem Verfahren (100) nach einem der Ansprüche 1 bis 9 eine Xylan aufweisende Zusammensetzung (1) hergestellt wird, wobei der Überstand (7) nach dem Ausfällen an die Alkalisierungsstufe (203) zur weiteren Alkalisierung von Zellstoff (206) zurückgeführt wird.
